# EUROPÄISCHE PATENTSCHRIFT

(11) **EP 2 393 696 B1**
(45) Veröffentlichungstag und Bekanntmachung des Hinweises auf die Patenterteilung: **29.04.2015**
(21) Anmeldenummer: 10700054.9
(22) Anmeldetag: 07.01.2010
(51) Int. Cl.: B60T 8/40

(54) **VERFAHREN ZUM BETREIBEN EINER BREMSANLAGE**
METHOD FOR OPERATING A BRAKING SYSTEM
PROCÉDÉ DE COMMANDE D'UN SYSTÈME DE FREINAGE

(30) Priorität: 05.02.2009 DE 102009000631; 17.02.2009 DE 102009000917; 05.06.2009 DE 102009024035
(43) Veröffentlichungstag der Anmeldung: 14.12.2011
(73) Patentinhaber: Continental Teves AG & Co. oHG, 60488 Frankfurt (DE)
(72) Erfinder: DRUMM, Stefan A., 55291 Saulheim (DE)
(86) Internationale Anmeldenummer: PCT/EP2010/050086
(87) Internationale Veröffentlichungsnummer: WO 2010/089162

(56) Entgegenhaltungen:
- WO-A1-01/72567
- WO-A1-97/39931
- WO-A1-97/41016
- WO-A1-2005/007476
- WO-A1-2005/108179

## Beschreibung

Die vorliegende Erfindung betrifft ein Verfahren zum Betreiben einer Bremsanlage für Kraftfahrzeuge nach dem Oberbegriff des Patentanspruchs 1.

Eine derartige Bremsanlage ist z. B. aus der internationalen Patentanmeldung WO 01/72567 A1 bekannt. Als nachteilig wird bei dem vorbekannten Bremssystem die Energieeffizienz der vorbekannten Bremsanlage empfunden, die in zwei Punkten verbesserungswürdig erscheint.

In der bevorzugten "Brake-by-Wire"- Betriebsart werden auch geringere Abbremsungen, die keine hohe Dynamik und keine radindividuelle Anpassung der Radbremsdrücke erfordern, mit einem aus dem Hochdruckspeicher entnommenen Druckmittelvolumen realisiert. Danach muss der Speicher mit einem im Vergleich zur genutzten hydraulischen Energie deutlich größeren Energieaufwand wieder nachgeladen werden. Dies trifft für die Mehrzahl der bei durchschnittlicher Fahrweise auftretenden Bremsungen zu. Daher ist es unter dem Gesichtspunkt des Energieverbrauchs sinnvoll, Druckmittel aus dem Hydrospeicher nur dann einzusetzen, wenn eine dynamische Bremsung erforderlich ist und bevorzugt Bremsungen direkt mit Hilfe des Drucks der elektrisch steuerbaren Druckquelle durchzuführen.

In einer Rückfallbetriebsart, in der keine elektrische Ansteuerung, aber hydraulische Energie in Form von Druck und Druckmittelvolumen im Hydrospeicher verfügbar ist, arbeitet die vorbekannte Bremsanlage (ebenso wie in der Brake-by-Wire"- Betriebsart) als Fremdkraftbremse. Hier erscheint es sinnvoller, auf den Betätigungsenergiebeitrag des Fahrzeugführers durch das Betätigen des Bremspedals nicht zu verzichten, sondern diesen mit zu nutzen. Mithin ist es sinnvoller, dass das hier vorgeschlagene neue Bremssystem in dieser Betriebssituation als Hilfskraftbremse arbeitet.

Für beide Punkte zur Verbesserung der Energieeffizienz schafft die vorliegende Erfindung die technischen Voraussetzungen.

In der WO 97/41016 A1 wird eine elektrohydraulische Bremsanlage mit einer Hydraulikpumpe und einem von der Pumpe gespeisten Hydraulikdruckspeicher beschrieben, wobei ein Druckaufbau oberhalb des maximalen Arbeitsdruckes des Druckspeichers allein durch die Pumpe erfolgt, um einen schnelleren Druckaufbau zu erzielen.

Aus der WO 97/39931 A1 ist ebenfalls eine elektrohydraulische Bremsanlage mit einer Hydraulikpumpe und einem Hydraulikdruckspeicher bekannt, wobei bei normalen Bremsvorgängen Druckmittelvolumen nur aus dem Hydraulikdruckspeicher entnommen wird, während bei Bremsdruckanforderungen oberhalb des maximalen Arbeitsdruckes des Druckspeichers eine Bremsung allein mittels der Pumpe durchgeführt wird.

Es ist daher Aufgabe der vorliegenden Erfindung, ein Verfahren zum Betreiben der oben erwähnten Bremsanlage zu schaffen, das eine erhebliche Steigerung der Energieeffizienz ermöglicht.

Diese Aufgabe wird erfindungsgemäß durch ein Verfahren gemäß Anspruch 1 gelöst. Vorteilhafte Weiterbildungen des erfindungsgemäßen Verfahrens sind den Unteransprüchen 2 bis 13 entnehmbar.

In der folgenden Beschreibung wird die vorliegende Erfindung unter Bezugnahme auf die beiliegende schematische Zeichnung an einem Ausführungsbeispiel erläutert. In der Zeichnung zeigen
- Fig. 1: einen hydraulischen Schaltplan einer erfindungsgemäßen Bremsanlage,
- Fig. 2: eine erfindungsrelevante Teildarstellung der Bremsanlage zum Erläutern von für eine Normalbremsung erforderlichen Vorgängen,
- Fig. 3: eine erfindungsrelevante Teildarstellung der Bremsanlage zum Erläutern von für eine andere Betriebsart erforderlichen Vorgängen,
- Fig. 4: eine erfindungsrelevante Teildarstellung der Bremsanlage zum Erläutern von für eine sog. Extrembremsung erforderlichen Vorgängen,
- Fig. 5: eine erfindungsrelevante Teildarstellung der Bremsanlage zum Erläutern von für eine weitere Betriebsart erforderlichen Vorgängen, und
- Fig. 6: eine erfindungsrelevante Teildarstellung der Bremsanlage zum Erläutern von für ein Aufladen des Hochdruckspeichers erforderlichen Vorgängen.

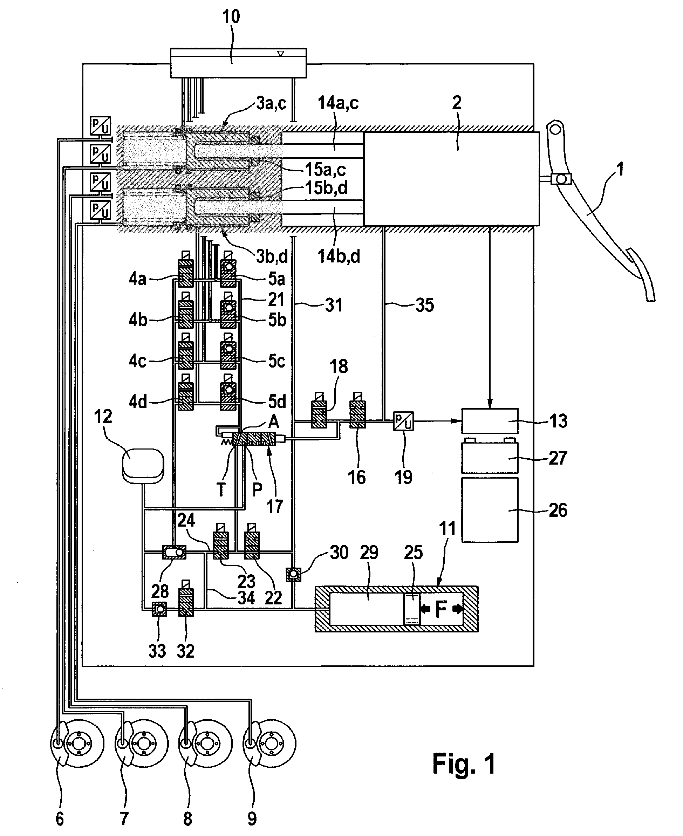

Die in Fig. 1 schematisch dargestellte Bremsanlage weist im Wesentlichen einen mittels eines Bremspedals 1 betätigbare Betätigungseinheit 2 auf, die beispielsweise als ein einkreisiger Hauptbremszylinder ausgeführt ist. Die erfindungsgemäße Bremsanlage weist weiterhin der Betätigungseinheit 2 wirkungsmäßig nachgeschaltete Kolben-Zylinder-Anordnungen bzw. Trennkolbeneinrichtungen 3a-d auf, denen elektrisch steuerbare Druckregelventile 4a-d, 5a-d, vorgeschaltet sind und an die Fahrzeugbremsen 6 - 9 angeschlossen sind, einen Druckmittelvorratsbehälter 10, eine hydraulische Druckquelle 11, einen Hochdruckspeicher 12, sowie eine elektronische Steuer- und Regeleinheit 13 auf. Dabei ist vorzugsweise jeder Radbremse 6 - 9 eine Trennkolbeneinrichtung 3a-d zugeordnet. Eine Kraftübertragung zwischen der Betätigungseinheit 2 und den Trennkolbeneinrichtungen 3a-d erfolgt mittels mechanischer Ansteuerungselemente 14a-d, die als Kraftübertragungsstäbe ausgebildet sind und die sich, ggf. unter Zwischenschaltung von Dämpfungselementen, an einem nicht dargestellten Kolben der Betätigungseinheit 2 abstützen. Zur Abdichtung der Ansteuerungselemente 14a-d nach außen sind Dichtungen vorgesehen, die mit den Bezugzeichen 15a-d versehen sind. Zur Versorgung der gezeigten erfindungsgemäßen Bremsanlage mit elektrischer Energie ist eine lediglich schematisch angedeutete Energieversorgungseinheit (z.B. elektrische Energieversorgung mit Spannungswandler) 26 vorgesehen, die mit einem elektrischen Speicher (elektrischer Akkumulator) 27 zusammen wirken kann.

Wie Fig. 1 weiter zu entnehmen ist, weist die Betätigungseinheit 2 einen nicht dargestellten hydraulischen Ansteuerraum auf, der über ein stromlos offenes (SO-) 2/2-Wegeventil 16 mit einem hydraulischen Ansteueranschluss einer Druckregelventilanordnung 17 verbunden ist, die im nachfolgenden Text näher erläutert wird. Der erwähnte Ansteueranschluss ist unter Zwischenschaltung eines stromlos geschlossenen (SG-) 2/2-Wegeventils 18 mit dem Druckmittelvorratsbehälter 10 verbindbar. Der im Ansteuerraum eingesteuerte Druck wird mittels eines Drucksensors 19 erfasst.

Wie bereits erwähnt wurde, ist jeder Radbremse eine Druckregelventilbaugruppe zugeordnet, die entweder wie dargestellt, aus zwei analog regelbaren 2/2 Wegeventilen 4, 5 oder alternativ, als ein 3/3 Wegeventil aufgebaut ist. Entscheidend ist, dass jede radindividuelle Druckregelbaugruppe 4a, 5a, 4b, 5b, 4c, 5c, 4d, 5d drei hydraulische Anschlüsse besitzt, und zwar einen stromlos geschlossenen "Hochdruckanschluss", einen Ausgangsanschluss und einen "Niederdruckanschluss". Die Hochdruckanschlüsse sind gemeinsam an den Ausgangsanschluss eines Wechselventils 28 angeschlossen, das zwischen dem Hochdruckspeicher 12 und der elektrisch steuerbaren Druckquelle 11 geschaltet ist. Die Ausgangsanschlüsse sind einzeln an die Trennkolbeneinrichtungen 3a-d und die Niederdruckanschlüsse sind gemeinsam an einen Leitungsabschnitt 21 angeschlossen, der mit einem Bremssystemdruck beaufschlagbar und im dargestellten Ruhezustand des Bremssystems über die Druckregelventilanordnung 17 und ein stromlos offenes Ventil 22 an den drucklosen Druckmittelvorratsbehälter 10 angeschlossen ist.

Eine am dem Hochdruckspeicher 12 abgewandten Eingangsanschluss des erwähnten Wechselventils 28 angeschlossene Ventilbaugruppe wird durch ein stromlos offenes (SO-) 2/2-Wegeventil 22 sowie ein stromlos geschlossenes (SG-) 2/2-Wegeventil 23 gebildet. Die Ventilbaugruppe weist dabei drei hydraulische Anschlüsse auf: einem mit dem Druckmittelvorratsbehälter 10 verbundenen Niederdruckanschluss, einem mit einem Niederdruckanschluss der Druckregelventilanordnung 17 verbundenen Arbeitsanschluss und einem Hochdruckanschluss, der mit einem hydraulischen Leitungsabschnitt 34 verbunden ist, über den - wie später ausführlicher erläutert wird - ein hydraulischer Druck eingespeist werden kann. Alternativ zu der vom SO-SG 2/2 Ventilpaar 22, 23 gebildeten Ventilbaugruppe mit drei Anschlüssen kann ein einzelnes 3/3 Wegeventil eingesetzt werden.

Weiterhin ist in der Zeichnung erkennbar, dass die vorhin erwähnte Druckquelle 11 als ein elektrohydraulischer Aktuator ausgebildet ist, dessen Kolben 25 mittels eines nicht gezeigten Elektromotors über ein Rotations-Translations-Getriebe betätigbar ist. Ein vom Kolben 25 begrenzter Druckraum 29 des elektrohydraulischen Aktuators 11 ist einerseits über ein Ansaug-Rückschlagventil 30 und eine hydraulische Verbindungsleitung 31 mit dem Druckmittelbehälter 10 und andererseits über ein elektromagnetisch betätigbares Trennventil 32 sowie ein Ausstoß-Rückschlagventil 33 mit dem Hochdruckspeicher 12 verbunden, so dass der Hochdruckspeicher 12 von der Druckquelle 14 aufgeladen werden kann. Alternativ zum Einsatz eines elektrohydraulischen Aktuators ist in einer anderen, nicht dargestellten Ausgestaltung der Erfindung eine Ausführung der Druckquelle 11 als eine elektromotorisch angetriebene Pumpe denkbar, die anstelle des Rückschlagventils 30 in die hydraulische Schaltung eingefügt wird. Die Saugseite der Pumpe wäre dabei über die hydraulische Verbindungsleitung 31 mit dem Druckmittel-vorratsbehälter 10 und die Druckseite der Pumpe über das Trennventil 32 sowie das Rückschlagventil 33 mit dem Hochdruckspeicher 12 verbunden. Das bereits erwähnte Rückschlagventil 33 verhindert ein Entleeren des Hochdruckspeichers 12 bei einer Rücknahme des Drucks der Druckquelle 14. Dies ermöglicht ein Einregeln eines Druckwerts unterhalb des Druckniveaus des Hochdruckspeichers 12 in der hydraulischen Verbindungsleitung 34 mittels der elektronisch steuerbaren Druckquelle 14, wobei die Verbindungsleitung 34 den elektrohydraulischen Aktuator 11 mit dem Eingangsanschluss des vorhin erwähnten 2/2-Wegeventils 23 verbindet.

Wie der Fachmann außerdem der Zeichnung entnehmen kann, ist die vorhin mehrfach erwähnte Druckregelventilanordnung 17 als ein 3/3-Wegeventil ausgebildet, das im Sinne einer Druckwaage mit entgegen gesetzten Wirkrichtungen einerseits von dem vom Fahrer in der Betätigungseinheit 2 eingesteuerten Druck und andererseits von dem in der Leitung 21 herrschenden Bremssystemdruck über zwei in der Zeichnung rechts und links angeordnete hydraulische Steueranschlüsse ansteuerbar ist. Zur Realisierung der in der Zeichnung als 3/3-Wegeventil dargestellten Druckregelventilanordnung 17 kann sowohl die Schieberventiltechnik als auch die Sitzventiltechnik oder eine Kombination dieser Varianten eingesetzt werden. Ausdrücklich sei an dieser Stelle darauf hingewiesen, dass es zwischen den figürlich dargestellten Schaltstellungen der Druckregelventilanordnung 17 mit wechselnden hydraulischen Durchgängen und Verschlüssen kontinuierliche Übergangszustände gibt, die bei entsprechender Ansteuerung im regelungstechnischen Sinne stabil angefahren werden können. Das dargestellte 3/3 Wegeventil ist demnach als Analogventil ausgeführt und nicht als Schaltventil mit instabilen Übergangszuständen. Wenn im nachfolgenden Text dennoch von Schaltstellungen die Rede ist, dann ist damit jeweils ein Ansteuerungs- oder Betätigungszustand der Druckregelventilanordnung 17 gemeint, der obwohl kontinuierlich variierbar einer der figürlich dargestellten Ventilstellungen nahe kommt oder ihr zugeordnet werden kann. Neben den bereits erwähnten Steueranschlüssen besitzt das 3/3 Wegeventil einen Hochdruckanschluss P, einen Niederdruckanschluss T und einen Arbeitsanschluss A. In der ersten, in der Zeichnung dargestellten Schaltstellung ist sein Arbeitsanschluss (A) über seinen Niederdruckanschluss (T) mit dem Mittelabgriff der beiden 2/2-Wegeventile 22, 23 verbunden, während sein Hochdruckanschluss (P), der direkt an den Hochdruckspeicher 12 angeschlossen ist, gesperrt bleibt.

In der zweiten Schaltstellung des 3/3-Wegeventils 17 bleiben alle drei Anschlüsse (P, T, A) gesperrt, während in der dritten Schalstellung der Arbeitsanschluss (A) mit dem Hochdruckanschluss (P) verbunden ist. Die vorhin genannten Komponenten 11, 12, 17, 25, 26, 29 - 34 bilden eine hydraulische Schaltung zur elektronisch kontrollierten Bereitstellung individueller Radbremsdrücke, insbesondere als Reaktion auf eine über das Bremspedal 1 in das System eingeleitete Bremskraft im "Brake-by-Wire" Modus als Normalbetriebsart. Zusätzlich werden bei nicht verfügbarer elektronischer Ansteuerung rein hydraulisch über die erwähnte Druckregelventilanordnung 17 verstärkte Bremsdrücke bereitgestellt, während bei erschöpftem Hochdruckspeicher 12 lediglich unverstärkte Radbremsdrücke zur Verfügung stehen.

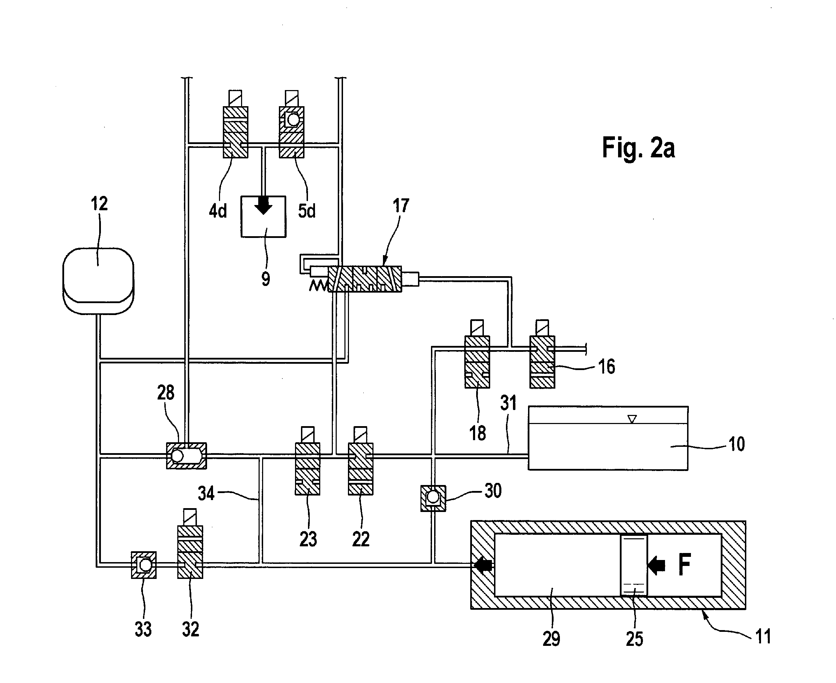

Wie bereits oben erwähnt wurde, zeigt Fig. 2a einen Druckaufbau, der bei der erfindungsgemäßen Bremsanlage bei Normalbremsungen benötigt wird. Obwohl von den Radbremsen 6 - 9 zu Erläuterungszwecken lediglich eine (9) dargestellt ist, erhalten alle Radbremsen 6 - 9 den gleichen Druck. Der Druckaufbau erfolgt ausschließlich durch eine Ansteuerung der elektrisch steuerbaren Druckquelle 11 in der Betätigungsrichtung des Kolbens 25, die mit dem Richtungspfeil F bezeichnet ist. Dabei wird das im Zusammenhang mit Fig. 1 erwähnte, stromlos geschlossene 2/2-Wegeventil 23 derart umgeschaltet, dass das aus dem Druckraum 29 der Druckquelle 11 verdrängte Druckmittelvolumen zur Druckregelventilanordnung 17 und von dort in ihrer gezeigten Schaltstellung zu den dritten Anschlüssen der Druckregelventileinrichtungen 4, 5 gelangt. Der Druckaufbau in den Radbremsen 6 - 9 bzw. der gezeigten Radbremse 9 erfolgt durch ein Durchströmen des zugeordneten stromlos offenen Druckregelventils 5d. Dabei wird nur der benötigte Druck aufgebaut, so dass im Vergleich mit einer Bremsung, bei der der Hochdruckspeicher 12 heran gezogen wird, Energie gespart wird. Der Hochdruckspeicher 12 ist bei der beschriebenen Betriebsart von der elektrisch steuerbaren Druckquelle 11 durch das Trennventil 32 hydraulisch entkoppelt.

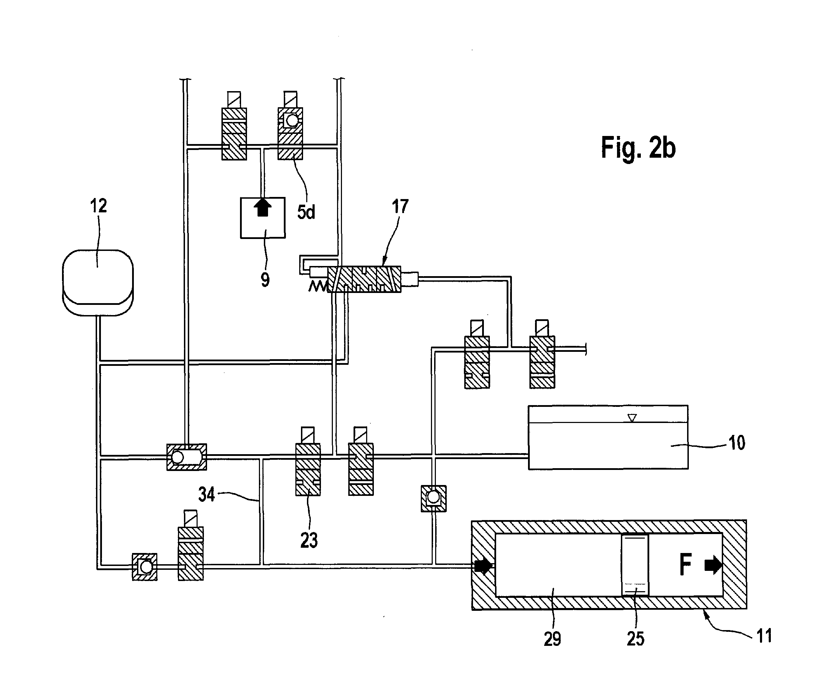

Ein Druckabbau bei einer Normalbremsung ist in Fig. 2b dargestellt. Dabei bleiben sämtliche im Zusammenhang mit Fig. 2a erwähnten Ventile in den dort gezeigten Schaltstellungen, während der Kolben 25 der elektrisch steuerbaren Druckquelle 11 im Sinne einer Vergrößerung des Druckraumes 29 zurück gefahren wird (s. Richtungspfeil F). Das Druckmittel strömt von den Radbremsen (9) über die offenen Ventile 5d, 17 und 23 in die Leitung 34 und von dort in den Druckraum 29.

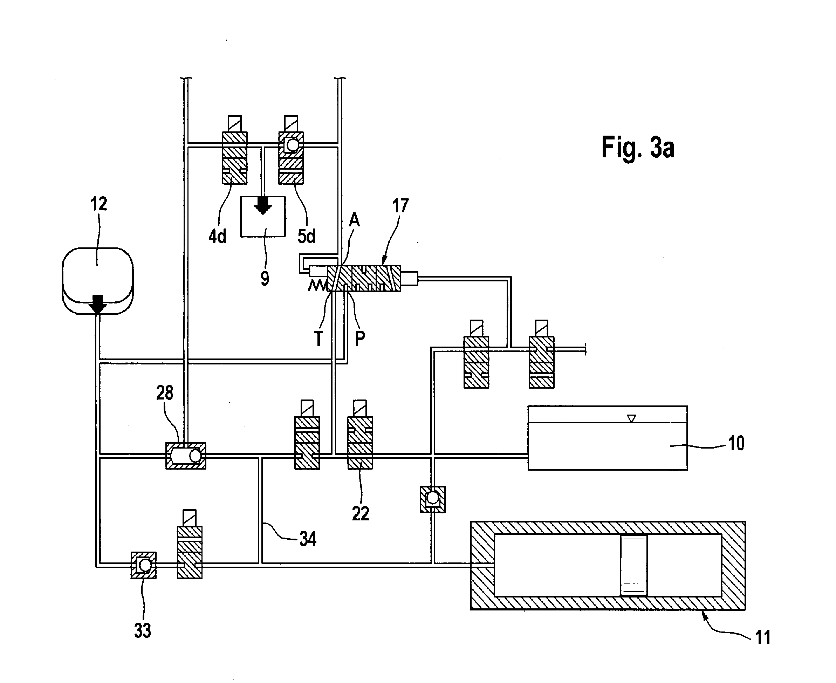

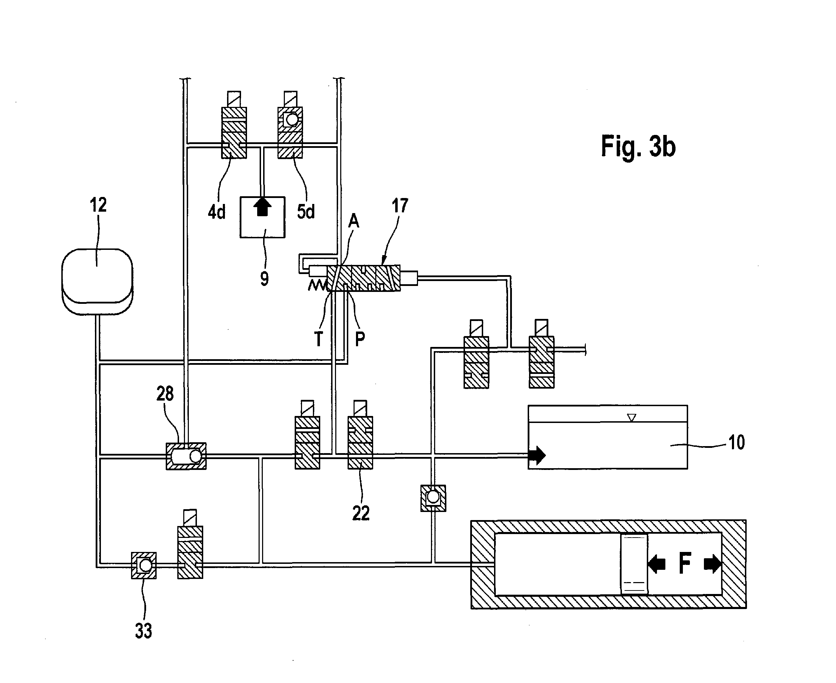

Die in Fig. 3a, b gezeigte weitere Betriebsart kommt dann in Frage, wenn der vom Hochdruckspeicher 12 bereit gestellte Druck höher ist als der in der Leitung 34 herrschende Druck, der von der elektrisch steuerbaren Druckquelle 11 aufgebracht werden kann. Der in Fig. 3a gezeigte Druckaufbau findet dann statt, wenn
- radindividuelle Drücke benötigt werden,
- eine starke Belastung des im Fahrzeug vorhandenen Bordnetzes vermieden werden soll,
- eine besonders hohe Druckaufbaudynamik benötigt wird, oder
- eine Bremsung während des Ladevorgangs des Hochdruckspeichers 12 durchgeführt werden muss.

Dabei wird der vom Hochdruckspeicher 12 gelieferte Druck vom Wechselventil 28 zu den zweiten Anschlüssen der Druckregeventileinrichtungen 4, 5 durchgelassen, wobei Druckregelventile 4 in eine Schaltstellung umgeschaltet werden, die ein Beaufschlagen der zugeordneten Radbremsen (9) mit dem Hochdruckspeicherdruck ermöglichen.

Bei einem Druckabbau wird die Druckregelventileinrichtung 4d, 5d umgeschaltet, so dass die Radbremse (9) vom zweiten Anschluss der Druckregelventileinrichtung 4d, 5d bzw. dem Ausgangsanschluss des Wechselventils 28 entkoppelt und mit dem Arbeitsanschluss A der Druckregelventilanordnung 17 verbunden wird. Durch die in der gezeigten Ruhestellung der Druckregelventilanordnung 17 offene Verbindung zwischen ihrem Arbeitsanschluss A und ihrem Niederdruckanschluss T sowie das stromlos offene (SO-) 2/2-Wegeventil 22 wird der dritte Anschluss der Druckregelventileinrichtung 4d, 5d mit dem drucklosen Druckmittelvorratsbehälter 10 verbunden, so dass ein Abbau des in der Radbremse (9) eingesteuerten Druckes erfolgt.

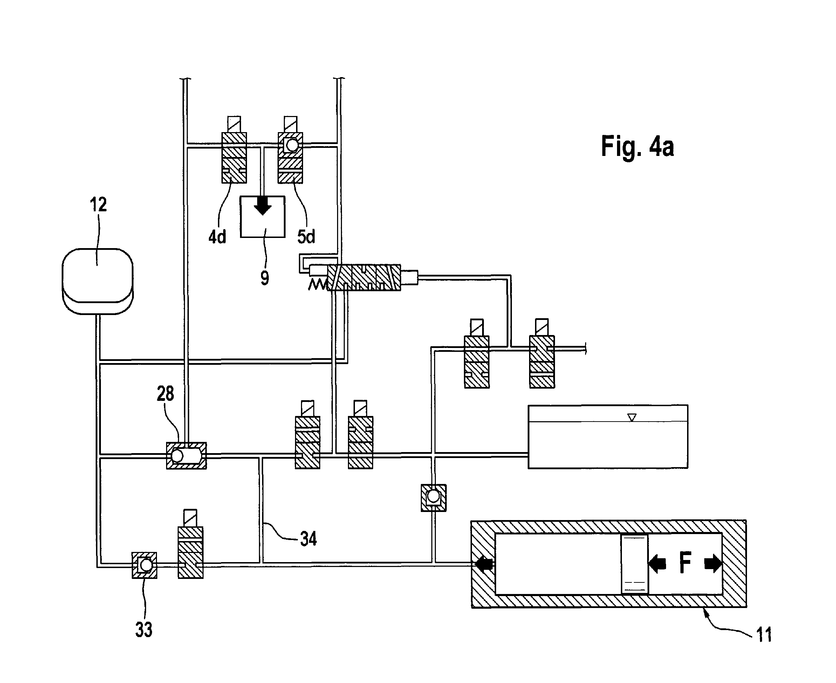

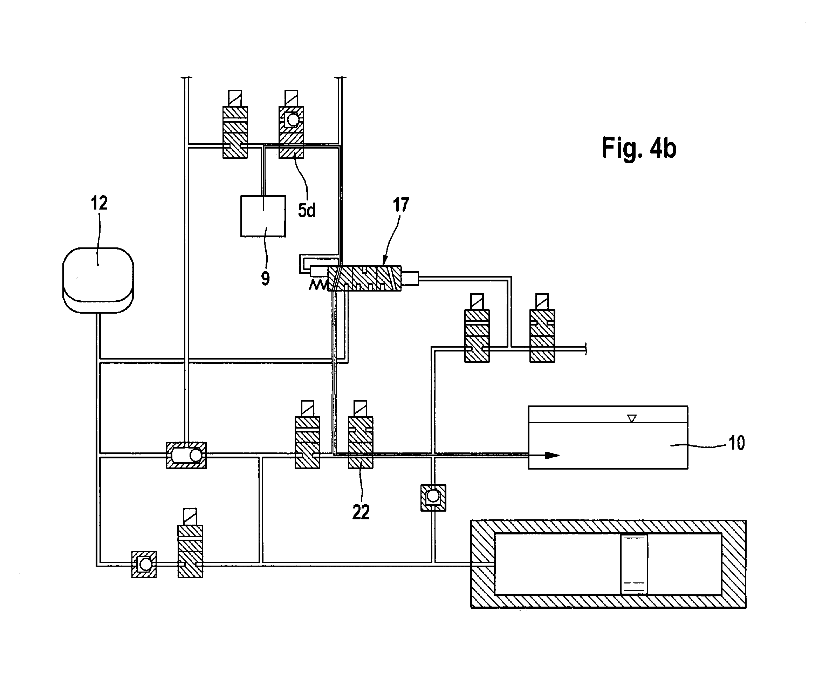

Fig. 4a, b zeigen die Funktion der erfindungsgemäßen Bremsanlage in einer weiteren Betriebsart, in der ein Bremsdruck erforderlich ist, der den augenblicklichen Wert des vom Hochdruckspeicher 12 bereit gestellten Druckes übersteigt und die als Extrembremsung bezeichnet wird. Der in Fig. 4a gezeigte Druckaufbau findet dann statt, wenn
- eine Vollbremsung trotz schlechter Bremsbeläge (Fading) erforderlich ist,
- ein radindividuelles Blockieren zum Verhindern eines Fahrzeugüberschlags sinnvoll ist.
Die Bremsung kann dabei sowohl radselektiv als auch in Radbremsgruppen durchgeführt werden. Dabei wird der von der elektrisch steuerbaren Druckquelle 11 gelieferte Druck vom Wechselventil 28 zu den zweiten Anschlüssen der Druckregelventileinrichtungen 4, 5 durchgelassen, wobei die Druckregelventile 4 in eine Schaltstellung umgeschaltet werden, die ein Beaufschlagen der zugeordneten Radbremsen (9) mit dem erwähnten Druck ermöglichen.

Ein Druckabbau (Fig. 4b) erfolgt auf die im Zusammenhang mit Fig. 3b erläuterte Art, so dass eine Beschreibung an dieser Stelle nicht erforderlich ist.

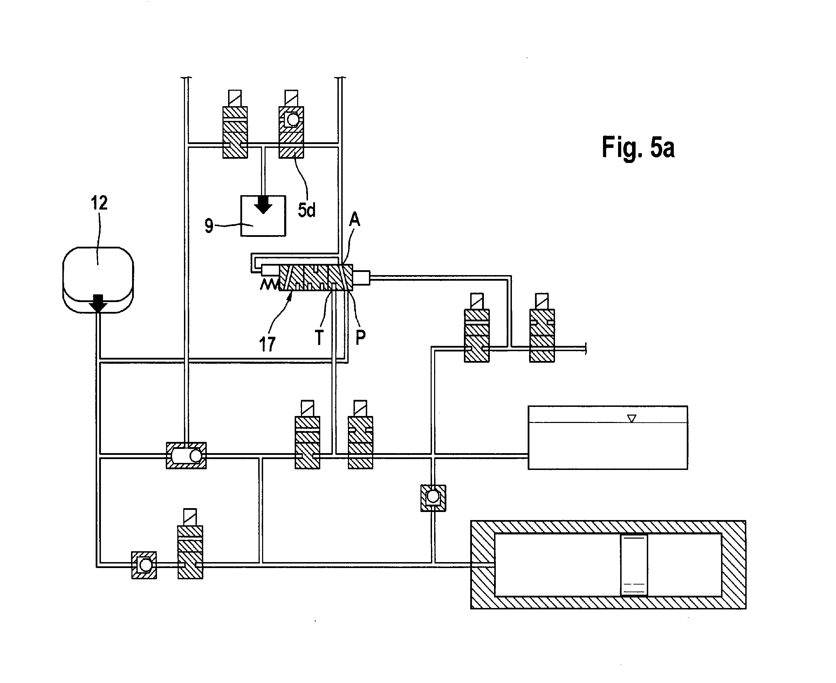

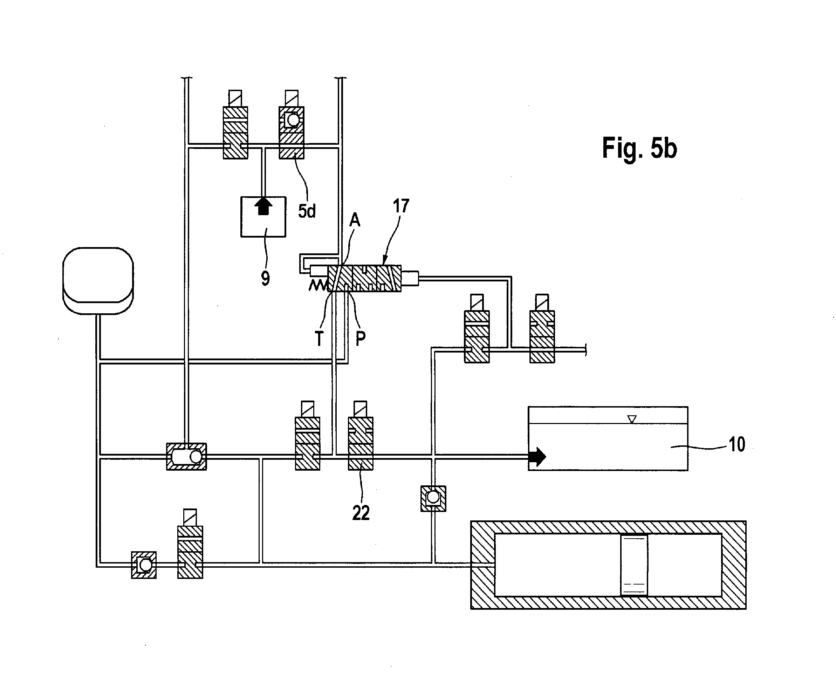

In Fig. 5a, b sind Bremsvorgänge dargestellt, die bei einem Ausfall der elektrischen Energieversorgung 26, 27 bzw. der elektronischen Steuer- und Regeleinheit 13 durchgeführt werden. Eine wichtige Voraussetzung für diese Betriebsart, in der keine Betätigung der elektromagnetisch ansteuerbaren Ventile möglich ist, ist ein geladener Hochdruckspeicher 12. Bei einem Druckaufbau, bei dem alle Radbremsen 6 - 9 mit dem gleichen Druck beaufschlagt werden, wird die Druckregelventilanordnung 17 durch eine Fahrerbetätigung in die in Fig. 5a gezeigte Schaltstellung gebracht, in der deren Hochdruckanschluss P mit dem Arbeitsanschluss A verbunden ist, so dass der vom Hochdruckspeicher 12 bereit gestellte Druck über den dritten Anschluss des stromlos offenen 2/2-Wegeventils 5d die Radbremsen (9) beaufschlagen kann. Die Drücke an den dritten Anschlüssen der Druckregelventileinrichtungen 4, 5 werden bremspedalgesteuert geregelt, wobei die Druckregelventilanordnung 17 mit hydraulischer Energie aus dem Hochdruckspeicher 12 versorgt wird.
Ein Abbau des in den Radbremse 6 - 9 eingesteuerten Druckes erfolgt zunächst durch ein Umschalten der Druckregelventilanordnung 17 in die in Fig. 5b gezeigte Ruhestellung, in der deren Arbeitsanschluss A mit dem Niederdruckanschluss T verbunden ist. Dabei sind die Radbremsen 6 - 9 über die dritten Anschlüsse der Druckregelventileinrichtungen 4, 5 sowie das stromlos offene (SO-) 2/2-Wegeventil 22 mit dem drucklosen Druckmittelvorratsbehälter 10 verbunden, so dass ein Druckabbau wie in den im Zusammenhang mit Fig. 3, 4 erläuterten Betriebsarten erfolgt.

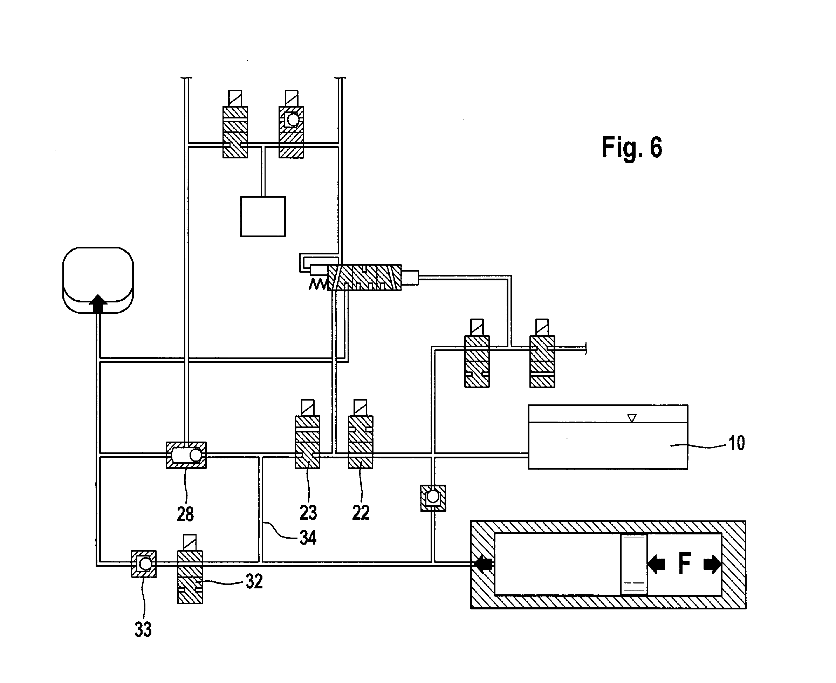

Schließlich ist in Fig. 6 ein Ladevorgang des Hochdruckspeichers 12 dargestellt, der an den in der gezeigten Ruhestellung geschlossenen Hochdruckanschluss P der Druckregelventilanordnung 17 angeschlossen ist. Zu diesem Zweck wird das Trennventil 32 in die offene Stellung geschaltet, so das das aus der elektrisch steuerbaren Druckquelle 11 verdrängte Druckmittel über das Ausstoß-Rückschlagventil 33 in den Hochdruckspeicher 12 strömen kann.

## Patentansprüche

1. Verfahren zum Betreiben einer Bremsanlage für Kraftfahrzeuge, die in einer "Brake-by-Wire" Betriebsart sowohl vom Fahrzeugführer als auch unabhängig vom Fahrzeugführer ansteuerbar ist, vorzugsweise in der "Brake-by-Wire" Betriebsart betrieben wird und in einer ersten Rückfallbetriebsart, in der eine Bremskraftverstärkung zur Verfügung steht, und in einer zweiten Rückfallbetriebsart ohne Bremskraftverstärkung betrieben werden kann, in denen nur der Betrieb durch den Fahrzeugführer möglich ist, mit
a)mindestens zwei Kolben-Zylinder-Anordnungen (3a-d) zum Erzeugen von Bremsdrücken in Radbremsen (6-9) des Fahrzeuges,
b) einer den Kolben-Zylinder-Anordnungen (3a-d) wirkungsmäßig vorgeschalteten Betätigungseinheit (2) zu deren mechanischer Betätigung in der zweiten Rückfallbetriebsart,
c) einem der Betätigungseinheit (2) vorgeschalteten Bremspedal (1) zum Ansteuern der Bremsanlage durch den Fahrzeugführer,
d) einer den Kolben-Zylinder-Anordnungen (3a-d) wirkungsmäßig vorgeschalteten hydraulischen Schaltung, die im Wesentlichen aus einer elektrisch steuerbaren, hydraulischen Druckquelle (11), einem von der Druckquelle (11) aufladbaren Hochdruckspeicher (12), zum Bereit halten hydraulischer Stellenergie, sowie aus elektrisch betätigbaren Druckregelventileinrichtungen (4,5) besteht, die einen ersten Anschluss bzw. einen Ausgangsanschluss zum hydraulischen Ansteuern der Kolben-Zylinder-Anordnungen (3a-d), einen zweiten Anschluss, der durch eine elektrische Betätigung mit dem ersten Anschluss verbunden wird, und einen dritten Anschluss aufweisen, der in unbetätigtem Zustand der Druckregelventileinrichtungen (4, 5) mit dem ersten Anschluss verbunden ist und der durch eine elektrische Betätigung in einer Durchströmrichtung absperrbar ist,
e) einer vom Bremspedal (1) betätigbaren Druckregelventilanordnung (17), die in der ersten Rückfallbetriebsart einen über das Bremspedal (1) dosierbaren Bremssystemdruck bereit stellt,
f) einer Fahrerwunscherfassungseinrichtung (19),
g) einem Druckmittelvorratsbehälter (10), der der Betätigungseinheit (2) und/oder der Kolben-Zylinder-Anordnungen (3a-d) zugeordnet ist, und
h) einer elektrischen Energieversorgung (26, 27) sowie
i) einer elektronischen Steuer- und Regeleinheit (13),
**dadurch gekennzeichnet, dass**
die als Normalbetriebsart vorgesehene "Brake-by-Wire" Betriebsart in eine Energiesparbetriebsart und zumindest eine erste Hochleistungsbetriebsart unterteilt wird, zwischen denen bremssituations-abhängig gewechselt wird und die unterschiedliche Komponenten der hydraulischen Schaltung nutzen, wobei in der Energiesparbetriebsart der von der elektrisch steuerbaren Druckquelle (11) bereit gestellte Druck den dritten Anschlüssen der Druckregelventileinrichtungen (4,5) zugeführt wird, während der vom Hochdruckspeicher (12) bereit gehaltene und an den zweiten Anschlüssen der Druckregelventileinrichtungen (4, 5) anliegende Druck ungenutzt bleibt, und wobei in der ersten Hochleistungsbetriebsart der von dem Hochdruckspeicher (12) gelieferte Druck den zweiten Anschlüssen der Druckregelventileinrichtungen (4,5) zugeführt wird.

2. Verfahren nach Anspruch 1 **dadurch gekennzeichnet, dass** zur Durchführung von moderaten Bremsungen die Energiesparbetriebsart gewählt wird.

3. Verfahren nach Anspruch 2 **dadurch gekennzeichnet, dass** der Hochdruckspeicher (12) in der Energiesparbetriebsart mittels eines elektromagnetisch betätigbaren Trennventils (32) von der elektrisch steuerbaren Druckquelle (11) hydraulisch entkoppelt wird.

4. Verfahren nach einem der Ansprüche 1 bis 3 **dadurch gekennzeichnet, dass** in der Energiesparbetriebsart ein benötigter Druckaufbau sowie -abbau über eine hydraulische Verbindung zwischen der elektrisch steuerbaren Druckquelle (11) und den Kolben-Zylinder-Anordnungen (3a-d) über die dritten Anschlüsse der Druckregelventileinrichtungen (4, 5) unter Zwischenschaltung der Druckregelventilanordnung (17) erfolgt.

5. Verfahren nach Anspruch 1 **dadurch gekennzeichnet, dass** bei Bedarf einer radindividuellen Bremsung oder einer hochdynamischen Bremsung die erste Hochleistungsbetriebsart gewählt wird und der Aufbau der Radbremsdrücke durch ein individuelles Öffnen der zweiten Anschlüsse der Druckregelventileinrichtungen (4, 5) erfolgt, während Druckabbauvorgänge über die dritten Anschlüsse der Druckregelventileinrichtungen (4, 5) erfolgen.

6. Verfahren nach Anspruch 5 **dadurch gekennzeichnet, dass** in der Hochleistungsbetriebsart der an den dritten Anschlüssen der Druckregelventileinrichtungen (4, 5) anliegende Druck auf einen Wert kleiner oder gleich dem niedrigsten Bremsdrucksollwert abgesenkt wird.

7. Verfahren nach Anspruch 6 **dadurch gekennzeichnet, dass** die dritten Anschlüsse der Druckregelventileinrichtungen (4,5) mit dem Druckmittelvorratsbehälter (10) verbunden werden.

8. Verfahren nach Anspruch 1 **dadurch gekennzeichnet, dass** bei einer Bremsung, die einen Bremsdruck erfordert, der den augenblicklichen Wert des vom Hochdruckspeicher (12) bereit gestellten Druckes übersteigt, eine zweite Hochleistungsbetriebsart gewählt wird, in der eine hydraulische Verbindung zwischen dem zweiten Anschluss der Druckregelventileinrichtungen (4, 5) und der elektrisch steuerbaren Druckquelle (11) geschaltet wird, während der Hochdruckspeicher (12) von dieser Verbindung hydraulisch entkoppelt wird.

9. Verfahren nach Anspruch 8 **dadurch gekennzeichnet, dass** eine Erhöhung des Drucks der elektrisch steuerbaren Druckquelle (11) über den augenblicklichen Druckwert im Hochdruckspeicher (12) ein Wechselventil (28) umschaltet, dessen Ausgangsanschluss mit den zweiten Anschlüssen der Druckregelventileinrichtungen (4,5) verbunden ist.

10. Verfahren nach einem der Ansprüche 1 bis 9 **dadurch gekennzeichnet, dass** die Druckregelventilanordnung (17) hydraulisch ansteuerbar ausgebildet ist und dass die hydraulische Ansteuerung mittels einer elektrisch steuerbaren Deaktivierungseinrichtung (16, 18) unterbunden wird, so lange die elektrische Ansteuerbarkeit der elektrisch steuerbaren Druckquelle (11) sowie der Druckregelventileinrichtungen (4, 5) gegeben ist.

11. Verfahren nach Anspruch 10 **dadurch gekennzeichnet, dass** bei einem Ausfall der elektrischen Energieversorgung (26, 27) bzw. der elektronischen Steuer- und Regeleinheit (13) die Druckregelventilanordnung (17) die Drücke an den dritten Anschlüssen der Druckregelventileinrichtungen (4, 5) bremspedalgesteuert regelt, wobei die Druckregelventilanordnung (17) aus dem Hochdruckspeicher (12) mit hydraulischer Energie versorgt wird.

12. Verfahren nach einem der Ansprüche 1 bis 11 **dadurch gekennzeichnet, dass** eine Regelung des von der elektrisch steuerbaren Druckquelle (11) bereit gestellten Drucks durch die elektronische Antriebsregelung eines elektrohydraulischen Aktuators erfolgt.

13. Verfahren nach einem der Ansprüche 1 bis 11 **dadurch gekennzeichnet, dass** eine Regelung des von der elektrisch steuerbare Druckquelle bereit gestellten Drucks durch die koordinierte elektronische Regelung des Antriebs einer Pumpe und eines Ventils erfolgt.

## Claims

1. Method for operating a brake system for motor vehicles, which in a "brake-by-wire" operating mode can be controlled both by the vehicle driver and independently of the vehicle driver, which is preferably operated in the "brake-by-wire" operating mode and which can be operated in a first reversion operating mode, in which a brake booster is available, and in a second reversion operating mode without brake booster, in which only the operation by the vehicle driver is possible, comprising
a) at least two piston-cylinder arrangements (3a-d) for generating brake pressures in wheel brakes (6-9) of the vehicle,
b) an actuating unit (2) operatively connected to the piston-cylinder arrangements (3a-d) on the inlet side for their mechanical actuation in a second reversion operating mode,
c) a brake pedal (1) connected to the actuating unit (2) on the inlet side for control of the brake system by the vehicle driver,
d) a hydraulic circuit, which is operatively connected to the piston-cylinder arrangements (3a-d) on the inlet side and which substantially comprises an electrically controllable, hydraulic pressure source (11), a high-pressure accumulator (12) that can be charged by the pressure source (11) for maintaining hydraulic servo power, and electrically actuated pressure-regulating valve devices (4, 5), which comprise a first connection or an outlet connection for hydraulic control of the piston-cylinder arrangements (3a-d), a second connection, which is connected by an electrical actuation to the first connection, and a third connection, which in the unactuated state of the pressure-regulating valve devices (4, 5) is connected to the first connection and which can be shut off in a through-flow direction by an electrical actuation,
e) a pressure-regulating valve arrangement (17), which can be actuated by the brake pedal (1) and which in the first reversion operating mode provides a brake system pressure, proportionable via the brake pedal (1),
f) a driver intention registering device (19),
g) a hydraulic fluid reservoir (10), which is assigned to the actuating unit (2) and/or to the piston-cylinder arrangements (3a-d), and
h) an electrical power supply (26, 27) together with
i) an electronic control unit (13),
**characterized in that**
the "brake-by-wire" operating mode intended as normal operating mode is divided into an energy-saving operating mode and at least a first high-power operating mode, between which switching occurs as a function of the braking situation and which utilize different components of the hydraulic circuit, wherein in the energy-saving operating mode the pressure provided by the electrically controllable pressure source (11) is delivered to the third connections of the pressure-regulating valve devices (4, 5), whilst the pressure maintained by the high-pressure accumulator (12) and present at the second connections of the pressure-regulating valve devices (4, 5) remains unused, and wherein in the first high-power operating mode the pressure supplied by the high-pressure accumulator (12) is delivered to the second connections of the pressure-regulating valve devices (4.5).

2. Method according to Claim 1, **characterized in that** for performing moderate braking an energy-saving operating mode is selected.

3. Method according to Claim 2, **characterized in that** in the energy-saving operating mode the high-pressure accumulator (12) is hydraulically isolated from the electrically controllable pressure source (11) by means of a solenoid-actuated separating valve (32).

4. Method according to one of Claims 1 to 3, **characterized in that** in the energy-saving operating mode a necessary build-up and reduction of pressure by way of a hydraulic connection between the electrically controllable pressure source (11) and the piston-cylinder arrangements (3a-d) occurs by way of the third connections of the pressure-regulating valve devices (4, 5), via the pressure-regulating valve arrangement (17).

5. Method according to Claim 1, **characterized in that** when braking on individual wheels or highly dynamic braking is required the first high-power operating mode is selected and the build-up of the wheel brake pressures occurs through an individual opening of the second connections of the pressure-regulating valve devices (4, 5), whilst pressure reduction sequences occur via the third connections of the pressure-regulating valve devices (4, 5).

6. Method according to Claim 5, **characterized in that** in the high-power operating mode the pressure present at the third connections of the pressure-regulating valve devices (4, 5) is reduced to a value less than or equal to the lowest brake pressure set-point value.

7. Method according to Claim 6, **characterized in that** the third connections of the pressure-regulating valve devices (4, 5) are connected to the hydraulic fluid reservoir (10).

8. Method according to Claim 1, **characterized in that** in braking which requires a brake pressure exceeding the instantaneous value of the pressure provided by the high-pressure accumulator (12), a second high-power operating mode is selected, in which a hydraulic connection is switched between the second connection of the pressure-regulating valve devices (4, 5) and the electrically controllable pressure source (11), whilst the high-pressure accumulator (12) is hydraulically isolated from this connection.

9. Method according to Claim 8, **characterized in that** an increase of the pressure of the electrically controllable pressure source (11) in excess of the instantaneous pressure value in the high-pressure accumulator (12) switches a shuttle valve (28), the outlet connection of which is connected to the second connections of the pressure-regulating valve devices (4, 5).

10. Method according to one of Claims 1 to 9, **characterized in that** the pressure-regulating valve arrangement (17) is of hydraulically controllable design and that the hydraulic control is prevented by means of an electrically controllable deactivation device (16, 18) while ever the electrically controllable pressure source (11) and the pressure-regulating valve devices (4, 5) retain the facility for electrical control.

11. Method according to Claim 10, **characterized in that** in the event of a failure of the electrical power supply (26, 27) or of the electronic control unit (13) the pressure-regulating valve arrangement (17), controlled by the brake pedal, regulates the pressures at the third connections of the pressure-regulating valve devices (4, 5) and is supplied with hydraulic power from the high-pressure accumulator (12).

12. Method according to one of Claims 1 to 11, **characterized in that** the pressure provided by the electrically controllable pressure source (11) is regulated by the electronic drive control of an electro-hydraulic actuator.

13. Method according to one of Claims 1 to 11, **characterized in that** the pressure provided by the electrically controllable pressure source is regulated by the coordinated electronic control of the drive of a pump and a valve.

## Revendications

1. Procédé d'entraînement d'une installation de freinage pour véhicules automobiles pouvant être excitée, dans un mode de fonctionnement de type « frein à commande électrique » (brake by wire), tant par le conducteur du véhicule qu'indépendamment du conducteur du véhicule, et entraînée de préférence dans le mode de fonctionnement de type « frein à commande électrique » et pouvant être entraînée dans un premier mode de fonctionnement de réversion dans lequel un renfort de force de freinage est mis à disposition et dans un deuxième mode de fonctionnement de réversion sans renfort de force de freinage dans lesquels seul le fonctionnement par le conducteur du véhicule est possible, avec :
a) au moins deux agencements piston-cylindre (3a-d) permettant de produire des pressions de freinage dans les freins de roue (6-9) du véhicule ;
b) une unité d'actionnement (2) activement connectée en amont des agencements piston-cylindre (3a-d) pour leur actionnement mécanique dans le deuxième mode de fonctionnement de réversion ;
c) une pédale de frein (1) connectée en amont de l'unité d'actionnement (2) pour l'excitation de l'installation de freinage par le conducteur du véhicule ;
d) un circuit hydraulique activement connecté en amont des agencements piston-cylindre (3a-d), ledit circuit se composant pour l'essentiel d'une source de pression (11) hydraulique électriquement commandable, d'un accumulateur de haute pression (12) pouvant être chargé par la source de pression (11), pour tenir prête l'énergie de réglage hydraulique, ainsi que de dispositifs de soupape de régulation de pression (4, 5) électriquement actionnables comportant un premier raccord et/ou un raccord de sortie conduisant à l'excitation hydraulique des agencements piston-cylindre (3a-d), un deuxième raccord relié au premier raccord par actionnement électrique et un troisième raccord relié au premier raccord dans l'état inactionné des dispositifs de soupape de régulation de pression (4, 5) et pouvant être bloqué par un actionnement électrique dans une direction d'écoulement ;
e) un dispositif de soupape de régulation de pression (17) actionnable par la pédale de frein (1) et mettant à disposition dans le premier mode de fonctionnement de réversion un système de pression de freinage pouvant être dosé via la pédale de frein (1) ;
f) un dispositif de détection de souhait du conducteur (19) ;
g) un réservoir de moyen de pression (10) associé à l'unité d'actionnement (2) et/ou aux agencements piston-cylindre (3a-d) ; et
h) une alimentation en énergie électrique (26, 27) ; ainsi que
i) une unité de commande et réglage électronique (13) ; **caractérisé en ce que** :
le mode de fonctionnement de type « frein à commande électrique » prévu comme mode de fonctionnement normal est subdivisé en un mode de fonctionnement d'économie d'énergie et au moins un premier mode de fonctionnement de grande puissance, entre lesquels on passe en fonction de la situation de freinage et qui utilisent les différents composants du circuit hydraulique, sachant que dans le mode de fonctionnement d'économie d'énergie, la pression mise à disposition par la source de pression (11) électriquement commandable est amenée aux troisièmes raccords des dispositifs de soupape de régulation de pression (4, 5) tandis que la pression maintenue à disposition par l'accumulateur de haute pression (12) et régnant au niveau des deuxièmes raccords des dispositifs de soupape de régulation de pression (4, 5) reste non utilisée et sachant que dans le premier mode de fonctionnement de grande puissance, la pression fournie par l'accumulateur de haute pression (12) est amenée aux deuxièmes raccords des dispositifs de soupape de régulation de pression (4, 5).

2. Procédé selon la revendication 1, **caractérisé en ce que** pour réaliser des freinages modérés, le mode de fonctionnement sélectionné est le mode de fonctionnement d'économie d'énergie.

3. Procédé selon la revendication 2, **caractérisé en ce que** l'accumulateur de haute pression (12) est découplé sur le plan hydraulique de la source de pression (11) électriquement commandable dans le mode de fonctionnement d'économie d'énergie à l'aide d'un clapet d'isolation (32) actionnable de façon électromagnétique.

4. Procédé selon l'une quelconque des revendications 1 à 3, **caractérisé en ce que** dans le mode de fonctionnement d'économie d'énergie, une augmentation ainsi qu'un relâchement nécessaires de pression se produisent via une liaison hydraulique entre la source de pression (11) électriquement commandable et les agencements piston-cylindre (3a-d) via les troisièmes raccords des dispositifs de soupape de régulation de pression (4, 5), par interconnexion du dispositif de soupape de régulation de pression (17).

5. Procédé selon la revendication 1, **caractérisé en ce qu'**en cas de besoin de freinage individuel de roue ou de freinage hautement dynamique, le premier mode de fonctionnement de grande puissance est sélectionné et l'augmentation des pressions de frein de roue se produit via une ouverture individuelle des deuxièmes raccords des dispositifs de soupape de régulation de pression (4, 5) tandis que les processus de relâchement de pression se produisent via les troisièmes raccords des dispositifs de soupape de régulation de pression (4, 5).

6. Procédé selon la revendication 5, **caractérisé en ce que** dans le mode de fonctionnement de grande puissance, la pression régnant au niveau des troisièmes raccords des dispositifs de soupape de régulation de pression (4, 5) est rabaissée à une valeur inférieure ou égale à la pression la plus basse de la valeur théorique de freinage.

7. Procédé selon la revendication 6, **caractérisé en ce que** les troisièmes raccords des dispositifs de soupape de régulation de pression (4, 5) sont reliés au réservoir de moyen de pression (10).

8. Procédé selon la revendication 1, **caractérisé en ce qu'**en cas de freinage nécessitant une pression de freinage dépassant la valeur instantanée de la pression mise à disposition par l'accumulateur de haute pression (12), un deuxième mode de fonctionnement de grande puissance est sélectionné dans lequel une liaison hydraulique entre le deuxième raccord des dispositifs de soupape de régulation de pression (4, 5) et la source de pression (11) électriquement commandable est connectée tandis que l'accumulateur de haute pression (12) est découplé sur le plan hydraulique de cette liaison.

9. Procédé selon la revendication 8, **caractérisé en ce qu'**une augmentation de la pression de la source de pression (11) électriquement commandable commute, via la valeur instantanée de pression régnant dans l'accumulateur de haute pression (12), un clapet basculant (28) dont le raccord de sortie est relié aux deuxièmes raccords des dispositifs de soupape de régulation de pression (4, 5).

10. Procédé selon l'une quelconque des revendications 1 à 9, **caractérisé en ce que** le dispositif de soupape de régulation de pression (17) peut être excité sur le plan hydraulique et que l'excitation hydraulique est empêchée au moyen d'un dispositif de désactivation (16, 18) électriquement commandable tant que l'excitabilité électrique de la source de pression (11) électriquement commandable ainsi que des dispositifs de soupape de régulation de pression (4, 5) est reconnue.

11. Procédé selon la revendication 10, **caractérisé en ce qu'**en cas de panne de l'alimentation en énergie électrique (26, 27) et/ou de l'unité de commande et réglage électronique (13), le dispositif de soupape de régulation de pression (17) régule par commande de pédale de frein les pressions régnant au niveau des troisièmes raccords des dispositifs de soupape de régulation de pression (4, 5), le dispositif de soupape de régulation de pression (17) étant alimenté en énergie hydraulique à partir de l'accumulateur de haute pression (12).

12. Procédé selon l'une quelconque des revendications 1 à 11, **caractérisé en ce qu'**une régulation de la pression mise à disposition par la source de pression (11) électriquement commandable se produit par réglage de l'entraînement électronique d'un actionneur électrohydraulique.

13. Procédé selon l'une quelconque des revendications 1 à 11, **caractérisé en ce qu'**un réglage de la pression mise à disposition par la source de pression électriquement commandable se produit par réglage électronique coordonné de l'entraînement d'une pompe et d'une soupape.
